(19) Europäisches Patentamt
European Patent Office
Office européen des brevets

(11) **EP 4 189 871 B1**

(12) **EUROPEAN PATENT SPECIFICATION**

(45) Date of publication and mention
of the grant of the patent:
**05.06.2024 Bulletin 2024/23**

(21) Application number: **21758992.8**

(22) Date of filing: **27.07.2021**

(51) International Patent Classification (IPC):
**H04L 9/40** *(2022.01)* **G06N 20/00** *(2019.01)*
**G06N 3/08** *(2023.01)* **G06F 21/56** *(2013.01)*

(52) Cooperative Patent Classification (CPC):
**H04L 63/145; G06F 21/566; G06N 20/00;**
G06N 3/047; G06N 3/08

(86) International application number:
**PCT/US2021/070981**

(87) International publication number:
**WO 2022/027009 (03.02.2022 Gazette 2022/05)**

(54) **CONJOINING MALWARE DETECTION MODELS FOR DETECTION PERFORMANCE AGGREGATION**

ZUSAMMENFÜGUNG VON MALWARE-DETEKTIONSMODELLEN ZUR ERKENNUNG VON LEISTUNGSAGGREGATION

CONJONCTION DE MODÈLES DE DÉTECTION DE LOGICIELS MALVEILLANTS POUR UNE AGRÉGATION DE PERFORMANCE DE DÉTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2020 US 202016940731**

(43) Date of publication of application:
**07.06.2023 Bulletin 2023/23**

(73) Proprietor: **Palo Alto Networks, Inc.**
**Santa Clara, CA 95054 (US)**

(72) Inventors:
• **RAO, Akshata Krishnamoorthy**
**Santa Clara, California 95054 (US)**
• **TSECHANSKY, Danny**
**Santa Clara, California 95054 (US)**
• **HU, Wenjun**
**Santa Clara, California 95054 (US)**

(74) Representative: **Arnold & Siedsma**
**Bezuidenhoutseweg 57**
**2594 AC The Hague (NL)**

(56) References cited:
**US-A1- 2019 294 792**

• **LIU JIAYONG ET AL: "A Distance-Based Method for Building an Encrypted Malware Traffic Identification Framework", IEEE ACCESS, vol. 7, 5 August 2019 (2019-08-05), pages 100014-100028, XP011738620, DOI: 10.1109/ACCESS.2019.2930717 [retrieved on 2019-08-05]**
• **XU KE ET AL: "DeepRefiner: Multi-layer Android Malware Detection System Applying Deep Neural Networks", 2018 IEEE EUROPEAN SYMPOSIUM ON SECURITY AND PRIVACY (EUROS&P), IEEE, 24 April 2018 (2018-04-24), pages 473-487, XP033373224, DOI: 10.1109/EUROSP.2018.00040 [retrieved on 2018-07-06]**
• **Yuji Waizumi ET AL: "A Multi-Stage Network Anomaly Detection Method for Improving Efficiency and Accuracy", Journal of Information Security, vol. 03, no. 01, 1 January 2012 (2012-01-01), pages 18-24, XP055461409, ISSN: 2153-1234, DOI: 10.4236/jis.2012.31003**

## Description

### BACKGROUND

The disclosure generally relates to information security and monitoring or scanning of software or data including attack prevention.

Possible malware attacks come in the form of portable executable (PE) files that when executed natively can inject malicious processes. PE is a file format for executables, object code, dynamic-link libraries (DLLs), etc. that is designed for Windows® operating systems. A common attack is DLL injection in which the PE file contains instructions to copy itself to any region in memory. Information security systems (e.g. firewalls) can intercept and analyze executable files communicated over networks or stored natively on a personal computer prior to execution. This analysis can include using machine learning models trained to detect malware attacks including DLL injections and, once malicious executables are identified, running the executables on a virtual machine to determine the nature of the attack. The information security system stores maliciously identified executables as well as other file formats determined to be malware and uses them to train additional models for malware detection.

Documents US2019/294792A1, "A Distance-Based Method for Building an Encrypted Malware Traffic Identification Framework" (XP011738620), "DeepRefiner: Multi-layer Android Malware Detection System Applying Deep Neural Networks" (XP033373224) and "A Multi-Stage Network Anomaly Detection Method for Improving Efficiency and Accuracy" (XP055461409) disclose mechanims for conjoining malware detection models for detection performance aggregation.

### BRIEF DESCRIPTION OF THE DRAWINGS

Aspects of the disclosure may be better understood by referencing the accompanying drawings.

Figure 1 is a schematic diagram of activation range tuning and deployment of conjoined models.

Figure 2 is a schematic diagram of a machine learning malware detector that detects potential malware in incoming samples.

Figure 3 is a schematic diagram of a detection model implementation system for implementing a candidate machine learning model in tandem with an incumbent machine learning model on a firewall.

Figure 4 is a flowchart of example operations for tuning and deploying a first and second malware detection model using a range of values.

Figure 5 is a flowchart of example operations for classifying incoming software samples.

Figures 6 is a flowchart of example operations for tuning an activation range for a candidate supplemental malware detection machine learning model with concurrent model inputs.

Figures 7 is a flowchart of example operations for tuning an activation range for a candidate supplemental malware detection machine learning model after filtering of samples based on output of an incumbent machine learning model.

Figures 8 is a flowchart of example operations for determining a malware verdict using serially conjoined machine learning models.

Figures 9 is a flowchart of example operations for determining a malware verdict using parallel conjoined machine learning models.

Figure 10 depicts an example computer system with a detection model activation range tuner and an incumbent/supplemental model sample filter.

### DESCRIPTION

The description that follows includes example systems, methods, techniques, and program flows that embody aspects of the disclosure. However, it is understood that this disclosure may be practiced without these specific details. For instance, this disclosure refers to implementing an incumbent model and supplemental model in tandem to classify malicious samples on a firewall in illustrative examples. Aspects of this disclosure can be instead applied to implementing an incumbent model and supplemental model in tandem for other types of sample classification. In other instances, well-known instruction instances, protocols, structures and techniques have not been shown in detail in order not to obfuscate the description.

### Overview

Code obfuscation, polymorphism, and metamorphism create malware variants. The malware variants and creation of new malware leads to a dynamic and challenging security threat landscape. To address changing and newly created security threats, security entities create and train candidate security threat detection models ("candidate detection models"). A candidate detection model will likely not be deployed beyond a lab or contained environment until it at least satisfies performance criteria of detection rate and false positive rate. Satisfying the false positive rate performance criterion may cost valuable time while a new/modified security threat spreads. Instead of relying solely on an already deployed security threat detection model ("incumbent detection model"), the incumbent detection model can be conjoined with a candidate detection model that has a higher detection rate despite an also higher false positive rate.

To leverage the higher detection rate of a candidate detection model and manage the higher false positive rate, an "activation range" is tuned for the candidate detection model to operate in conjunction with an incumbent model. The activation range is a range of output values for the incumbent model that activates the candidate detection model ("supplemental model" once deployed in conjunction with the incumbent model). Inputs having benign output values from the incumbent detection model that are within the activation range are subsequently fed into the supplemental model (i.e. the supplemental model is "activated"). Thus, the lower threshold of the activation range corresponds to the malware detection threshold of the incumbent model and the upper threshold determines how many benign classified outputs from the incumbent model activate the supplemental model. This conjoining of models with a tuned activation range manages overall false positive rate of the conjoined detection models while the malware detection rate increases over the incumbent detection model alone.

Example Illustrations

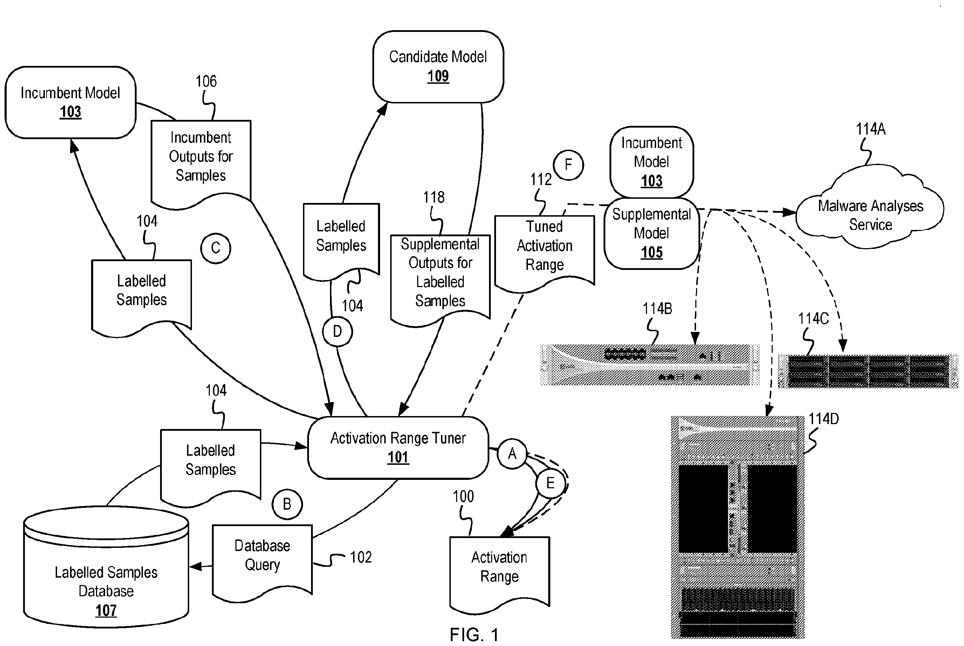

Figure 1 is a schematic diagram of activation range tuning and deployment of conjoined models. Figure 1 is annotated with a series of letters A-E. These letters represent stages of operations. Although these stages are ordered for this example, the stages illustrate one example to aid in understanding this disclosure and should not be used to limit the claims. Subject matter falling within the scope of the claims can vary with respect to the order and some of the operations.

Figure 1 summarily illustrates, an activation range tuner 101 initializes activation range 100. The activation range tuner 101 then queries a labelled samples database 107 with a database query 102 to retrieve labelled samples 104. The activation range tuner 101 communicates the labelled samples 104 to an incumbent model 103. The incumbent model 103 generates confidence levels for the labelled samples 104 and indicates incumbent output 106 to the activation range tuner 101. The activation range tuner 101 communicates the labelled samples 104 to a candidate model 109that classifies the labelled samples 104 as supplemental output 118 and indicates the supplemental output 118 to the activation range tuner 101. If the false positive rate of the combination of the candidate model 109 and the incumbent model 103 for the supplemental output 118 and the incumbent output 106 based on the activation range 100 is below a threshold false positive rate, the activation range tuner 101 updates/increments the activation range 100 and continues tuning the activation range 100 based on iteratively testing the false positive rate for the combination of models 103, 109 with additional labelled samples and the updated activation range 110. If/when the false positive rate for the combination of the candidate model 109 and incumbent model 103 is above the threshold false positive rate, the activation range tuner 101 rolls back to the previous activation range to generate a tuned activation range 112. The activation range tuner 101 conjoins the candidate model 109 to the incumbent model 103 and according to the tuned activation range 112 to generate the supplemental model 105 and deploys the models 103, 105 and the tuned activation range 112 to security devices/solutions illustrated in Figure 1 as malware analyses service 114A, enterprise firewall 114B, network device 114C, and enterprise firewall 114D.

At stage A, the activation range tuner 101 initializes the activation range 100. The initial activation range 100 can be a small interval with a lower limit starting at a malware detection threshold above which the incumbent model 103 classifies a sample as benign and below which the incumbent model 103 classifies a sample as malicious. The size of the interval (i.e. the value of the upper limit) can depend on computing resources for activation range tuning, domain knowledge for malware classifications by the incumbent model 103, a desired detection rate for the incumbent model 103/candidate model 109 combination, etc.

At stage B, the activation range tuner 101 sends the database query 102 to the labelled samples database 107. The database query 102 can be a query for malware samples of a particular threat type that the candidate model 109 is designed to detect, typical samples that will be seen by a firewall implementing the candidate model 109, samples corresponding to a new or unseen malware threat type, etc. The labelled samples database 107 returns labelled samples 104. The labelled samples 104 comprise software samples which are labelled as malicious/malware or benign. In some embodiments, features of samples comprise signatures of software samples, patterns or signatures of segments of software samples, application programming interface (API) calls, execution traces or sub-traces, API traces, header parameters, etc. The software samples can be executable files, network packets, object code, hypertext links, etc.

At stage C, the activation range tuner 101 communicates the labelled samples 104 to the incumbent model 103. The incumbent model 103 uses feature sets in the labelled samples 104 as input to generate confidence levels that are likelihoods each of the feature set is benign. The incumbent model 103 communicates the incumbent output 106 (e.g., classifications, prediction values, confidence values, etc.) to the activation range tuner 101. The activation range tuner 101 uses the incumbent output 106 to filter the labelled samples 104. A floor or lower limit of the activation range 100 corresponds to the classification threshold for the incumbent model 103 (i.e., the output value at which the incumbent model 103 classifies a sample as benign instead of malware). The incumbent model 103 can be any supervised machine learning model such as a support vector machine classifier, a trained neural network, a regression model, a random forest classifier, etc. that implements a confidence level (i.e. a likelihood value) for classifications. The incumbent model 103 is actively running on firewalls (e.g. the security products 114A, 114B, 114C, and 114D) and has a high detection rate on known malware threats.

At stage D, the activation range tuner 101 communicates the labelled samples 104 to the candidate model 109. Subsequently, the candidate model 109 classifies the labelled samples 104 and communicates its output - supplemental outputs 118 to the activation range tuner 101. The activation range tuner 101 compares samples classified as malware with their true classification (according to the labels) to generate a false positive rate. The false positive rate $FPR$ is determined as $FPR = \frac{FP}{B}$ where $FP$ is the number of samples labelled as benign but classified as malware by both the candidate model 109 and the incumbent model 103 according to the current activation range, and $B = FP + TB$ where TB is the number of true benign, i.e. the number of samples labelled as benign and classified as benign by the incumbent model 103 or the candidate model 109 according to the activation range. When calculating the classifications for the false positive rate, the classification of the incumbent output 106 is used when the corresponding classification value in the incumbent output 106 is outside the activation range 100 and the classification of the supplemental output 118 is used when the corresponding classification value in the incumbent output 106 is within the activation range 100.

As an alternative, the false positive rate can be updated using the dataset that was originally used to evaluate the incumbent model 103. In this embodiment, the activation range tuner 101 stores the count of false positives for the incumbent 103, the evaluation dataset used on the incumbent model 103, and the confidence values for all samples in the evaluation dataset above a threshold confidence value for the incumbent model 103 classifying samples as benign. If $Fi$ is the number of false positives from the incumbent model 103 on the evaluation dataset, and $B$ is the number of benign samples in the evaluation dataset, then $Fi/B$ i.e. the false positive rate for the incumbent model 103 on the evaluation dataset is known to be low because the incumbent model 103 was sent into production. Subsequently, the candidate model 109 is evaluated on samples in the evaluation dataset with stored confidence values in the activation range 100. The combined false positive rate $(Fi + Fs)/B$, where $Fs$ is the number of false positives of the candidate model on the samples from the evaluation dataset should be below a threshold false positive rate. From this one can infer a threshold value for the number of false positives for the candidate model 109 $Fs$ and from this derive a false positive rate performance criterion. However, if the candidate model 109 is evaluated against a new dataset then the incumbent model 103 will also have to be evaluated against this new dataset to compute the false positives and confidence values for using the activation range 100.

The activation range tuner 101 can also determine a detection rate for classifying the labelled samples 104 as malware. The detection rate $DR$ is determined as $DR = \frac{TM}{M}$, i.e. the number of true positives divided by the number of true malware. This detection rate is calculated for the incumbent model 103, the candidate model 109, and the combination of the incumbent model 103 and the candidate model 109. The detection rate for the incumbent model 103 and the candidate model 109 are based on the incumbent outputs 106 and the supplemental outputs 118 respectively corresponding to classifications of all of the labelled samples 104. The detection rate for the combination of the incumbent model 103 and the candidate model 109 uses the classification of the incumbent model 103 if the incumbent output 106 is outside the activation range 100 and uses the classification of the candidate model 109 if the incumbent output 106 is inside the activation range 100. If the detection rates for the candidate model 109, the incumbent model 103, and the combination of models fail a detection rate performance criterion (i.e. any of the detection rates are below a threshold detection rate), the combination of the candidate model 109 and incumbent model 103 can be rejected for use in malware detection. The activation range tuner 101 can calculate the false positive rate and detection rate every $n$ samples of the labelled samples 104, where $n >= 1$.

At stage E, the activation range tuner 101 evaluates the false positive rate for the combination of the candidate model 109 and the incumbent model 103. If the false positive rate fails a false positive rate performance criterion (i.e. the false positive rate is above a threshold false positive rate), the activation range tuner 101 rolls back the activation range to the activation range 100 of the previous evaluation to generate the tuned activation range 112. If the false positive rate satisfies the false positive rate criterion, then the activation range tuner 101 updates the activation range 100 to increase the ceiling or upper limit. This has the effect of widening the range of confidence/probability values for the activation range 100. If there remain unevaluated values of the supplemental output 118, then the activation range tuner 101 continues evaluating the supplemental output 118. If the false positive rate performance criterion is satisfied and all labelled samples 104 have been classified, then the activation range tuner 101 obtains additional labelled samples for tuning.

At stage F, the activation range tuner 101 conjoins the candidate model 109 and the incumbent model 103 according to the tuned activation range 112 to create the supplemental model 105 and communicates the tuned activation range 112 and the models 103, 105 to the security products 114A, 114B, 114C, and 114D. The security products 114A, 114B, 114C, and 114D receive and deploy the supplemental model 105 conjoined with the incumbent model 103 with the tuned activation range 112. The malware analysis service 114A can comprise an additional workflow to execute files on a virtual machine to analyze malicious effects, apply additional machine learning models or algorithms, perform domain expert analysis on the files, etc. and can implement the supplemental model 105 with the tuned activation range 112 in a pipeline with the incumbent model 103 already running natively. The security products 114B, 114C, and 114D are depicted as Palo Alto Networks® enterprise firewall PA-5020, M-700 appliance, and enterprise firewall PA-7080 respectively but can be any security product running natively on any remote device, across a cloud or network, embedded in a database, etc.

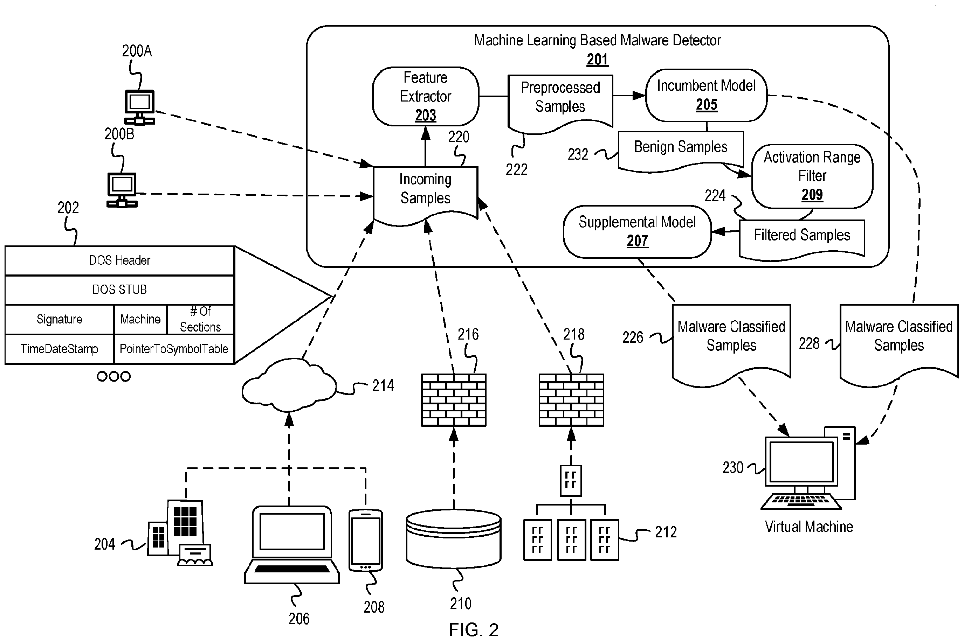

Figure 2 is a schematic diagram of a machine learning malware detector that detects potential malware in incoming samples. A machine learning based malware detector 201 receives incoming samples 220 from a variety of sources including network nodes 200A and 200B, a cloud service/infrastructure 214 associated with a branch computer network 204, a personal computer 206, and a mobile device 208, a firewall 216 that protects a database 210, and a firewall 218 that protects a company-wide network 212. The incoming samples 220 can be in portable executable (PE) format as depicted by file format 202. A feature extractor 203 extracts feature sets from the incoming samples 220 and encodes them into preprocessed samples 222 that the feature extractor 203 forwards to an incumbent model 205. The incumbent model 205 generates confidence levels for the preprocessed samples 222 and sends malware classified samples 228 to a virtual machine 230 for further analysis. The incumbent model 205 additionally sends benign samples 232 to an activation range filter 209 that filters the benign samples 232 to generate filtered samples 224 and sends them to the supplemental model 207. The supplemental model 207 classifies the filtered samples 224 and sends malware classified samples 226 to the virtual machine 230.

The network nodes 200A and 200B can be any endpoint that communicates with a network including a desktop, a laptop, a smartphone, a tablet, a server, a workstation, an internet-of-things device, etc. The nodes 200A, 200B can send samples directly to the machine learning based malware detector 201 according to a schedule, based on threat levels or security levels of the samples, etc. Alternatively, a firewall monitoring traffic on a network comprising the nodes 200A, 200B can intercept samples over the network and communicate samples to the machine learning based malware detector 201 that are suspected malware. Similarly, the database 210 and company-wide network 212 are monitored by firewalls 216 and 218 respectively. The firewall 216 can query the database 210 based on suspected vulnerabilities and can intercept and filter queries to the database 210 that correspond to suspected malicious activity. The firewall 218 can monitor applications running natively on nodes in the company-wide network 212 and can intercept samples being sent across the company-wide network 212 to detect malicious activity. The firewall 218 can maintain an internal database of threat levels or security levels based on domain knowledge of the company-wide network 212 to prioritize samples for analysis. The cloud service/infrastructure 214 can receive data samples across a variety of remote devices including the branch computer network 204, the personal computer 206, and the mobile device 208 and can parse and/or monitor the samples for malicious activity. Any of the cloud service/infrastructure 214 and firewalls 216, 218 can run native malware detection models that can be adapted to known threats for their respective domains and can use the malware detection models to identify samples to send to the machine learning malware analyzer.

The incoming samples 220 are aggregated across a potentially wide array of remote devices, cloud environments, and firewalls. The incoming samples 220 can be executable files such as portable executable (PE) format files, network packets, object code, etc. A sample PE format 202 includes a DOS header field, a DOS STUB field, a signature field, a machine field, a number of sections field, a TimeDateStamp field, and a PointerToSymbolTable field. Typical PE format files include additional fields that have been omitted for brevity. Executable files in the incoming samples 220 can be intercepted by the firewalls 216, 218 or the cloud service/infrastructure 214 and forwarded to machine learning based malware detector 201 prior to execution on a remote device or network.

The feature extractor 203 processes the incoming samples 220 to generate the preprocessed samples 222. The feature extractor 203 can be configured to identify the format of the incoming samples 220 across a wide array of file formats and can parse samples according to their format. For instance, the feature extractor 203 can identify that a sample is an html document and can remove delimiters "<", ">", "/" etc. to extract tokens that represent file formatting or substantive content in the html document. Subsequently, the feature extractor 203 can embed the tokens as a numerical vector using natural language processing (e.g. a Word2vec model). Finally, the feature extractor 203 can normalize the embedded samples to a format more conducive to classification by the incumbent model 205 and the supplemental model 207. If the incumbent model 205 and the supplemental model 207 are neural networks that were trained on numerical data with an approximately Gaussian distribution, then the numerical vectors can be normalized to have an approximately Gaussian distribution. The resultant numerical vectors comprise feature sets that capture the distribution of the incoming samples 220. The feature vectors aggregated into the preprocessed samples 222 which the feature extractor 203 sends to the incumbent model 205.

The incumbent model 205 uses the preprocessed samples 222 as input to generate classifications and corresponding confidence values. The incumbent model 205 sends malware classified samples 228 to the virtual machine 230 and benign samples 232 to the activation range filter 209. In some embodiments, the incumbent model 205 can send benign classified samples to the virtual machine 230 as well (e.g. if the confidence value for the classification is low). The activation range filter 209 filters samples in the preprocessed samples 222 that have confidence levels in a hard-coded activation range and aggregates them into the activated samples 224. Although the activation range is a hard-coded value, it can be dynamically updated by the machine learning based malware detector 201 by tracking the false positive rate of classifications sent to the virtual machine 230. If the false positive rate of the outgoing classifications exceeds a threshold false positive rate, the machine learning based malware detector 201 can decrease the upper limit of the activation range, and, in some embodiments, temporarily take the incumbent model 205 and supplemental model 207 out of the malware analysis pipeline until an updated activation range is determined. The supplemental model 207 receives the filtered samples 224 and classifies them, then sends the malware classified samples 226 to the virtual machine 230. The supplemental model 207 can send benign classified samples to the virtual machine 230 as well. The virtual machine 230 receives the malware classified samples 226, 228 and executes them in a virtual environment to monitor potential malicious effects without exposing any of the remote devices depicted in Figure 2 to malware.

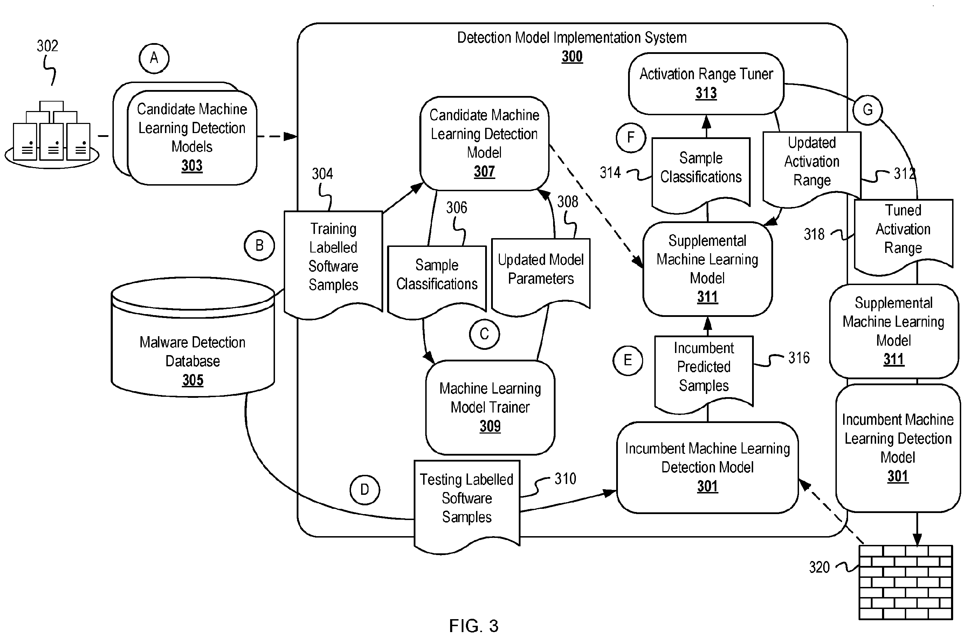

Figure 3 is a schematic diagram of a detection model implementation system for implementing a candidate machine learning model in tandem with an incumbent machine learning model on a firewall. Figure 3 is annotated with a series of letters A-G. These letters represent stages of operations. Although these stages are ordered for this example, the stages illustrate one example to aid in understanding this disclosure and should not be used to limit the claims. Subject matter falling within the scope of the claims can vary with respect to the order and some of the operations.

A detection model implementation system 300 receives candidate machine learning detection models 303 (stage A) from a model factory 302 to be implemented in a firewall 320. The detection model implementation system 300 selects a candidate machine learning detection model 307 and retrieves training labelled software samples 304 (stage B) from a malware detection database 305 to input into the candidate machine learning detection model 307. A machine learning model trainer 309 receives sample classifications 306 in the training labelled software samples 304 and, based on the difference between the sample classifications 306 and labels for the software samples (benign or malware) in the in the labelled software samples 304, sends updated model parameters 308 to the candidate machine learning detection model 307 (stage C). Once the candidate machine learning detection model 307 is trained, the detection model implementation system 300 obtains an incumbent machine learning detection model. The incumbent machine learning detection model 301 receives testing labelled software samples 310 from the malware detection database 305 (stage D) and uses them to indicate classified benign samples in the incumbent predicted samples 316. A supplemental machine learning model 311 (i.e. a trained version of the candidate machine learning detection model 307) generated by the machine learning model trainer 309 receives the incumbent predicted samples 316 and uses them to generate sample classifications 314 (stage E). An activation range tuner 313 receives the sample classifications 314 and, based on a false positive rate of the sample classifications 314, generates an updated activation range 312 for the supplemental machine learning model 311 (stage F). The detection model implementation system 300 iterates stages D, E, and F until a termination criterion for the activation range is satisfied. Subsequently, the detection model implementation system 300 forwards an optimized activation range 318 and the supplemental machine learning model 311 to the firewall 320 for implementation.

At stage A, the model factory 302 sends candidate machine learning detection models 303 determined to have a good detection rate of a malware, malware variant, or malware family to the detection model implementation system 300. The candidate machine learning detection models 303 can be any machine learning model well suited to identifying or detecting malware in software samples e.g. a support vector machine, a random forest classifier, a neural network, gradient boosting, etc. The model factory 302 trains the candidate machine learning detection models 303 on labelled data sets including those labelled malware and those labelled benign (e.g. from the malware detection database 305) to determine whether they are well suited for deployment based on detection rate of malware, false positive rate, efficiency, training time, etc. Candidate machine learning detection models 303 can be chosen for having a "good" detection rate, where "good" depends on typical malware detection rates in the field and is typically higher than the detection rate for the incumbent machine learning detection model 301. Alternatively, the detection rate for the candidate machine learning detection models 303 can be lower than or equal to the detection rate for the incumbent machine learning detection model 301 but the type of malware detected by the candidate machine learning detection models 303 is different. In some embodiments, the candidate machine learning detection models 303 can have a higher standalone (i.e., before conjoining) false positive rate than the incumbent machine learning detection model 301 and also a higher detection rate. The standalone false positive rate for the candidate machine learning detection models 303 can be improved by conjoining with the incumbent machine learning detection model 301 while maintaining the improved detection rate. For example, the candidate machine learning detection models 303 can detect new malware threats (e.g., new malware or malware variant) that the incumbent machine learning detection model 301 has not been trained to detect. Evaluation of candidate machine learning detection models 303 can include qualitative analysis such as domain-level expert knowledge of how well certain machine learning models detect certain types of malware. If a machine learning model is known to be effective against a new threat type in a different domain, that machine learning model can be chosen by the model factory 302 to detect that threat type.

In some embodiments, the model factory 302 sends the candidate machine learning detection models 303 and an updated version of the incumbent machine learning detection model 301. Although a supplemental machine learning model could be joined with an already deployed incumbent model according to a tuned activation range, deployment of the models together allows for an updated version of the incumbent model to be deployed in the conjoined models. The already deployed incumbent model can be replaced with the conjoined models that include an updated version of the incumbent model. This updated version can be trained on updated malware data to detect new malware threats and/or have an updated architecture. Training of an incumbent machine learning detection model can be performed prior to or concurrently with tuning of the activation range.

At stage B, the detection model implementation system 300 receives training labelled software samples 304 from the malware detection database 305. The training labelled software samples 304 can be different than malware data used to test the candidate machine learning detection models 303 and can be specific to the domain of the firewall 320 on which the candidate machine learning detection models 303 will be implemented. For instance, when the firewall 320 is detecting malware on executables, the training labelled software samples 304 can comprise Portable Executable (PE) files. Each sample in the training labelled software samples 304 comprises a binary label indicating whether the sample is malicious or benign. These labels are used for training and are not actual inputs into the candidate machine learning detection model 307.

At stage C, the machine learning model trainer 309 receives sample classifications 306 generated from inputting the training labelled software samples 304 (without the labels) into the candidate machine learning detection model 307. In some embodiments, the training labelled software samples 304 need to be formatted and/or normalized before being input into the candidate machine learning detection model 307. The machine learning model trainer 309 can parse and transform the training labelled software samples 304 by isolating tokens in the labelled software samples, embedding the tokens as numerical vectors, and normalizing the numerical vectors to be input into the candidate machine learning detection model 307. To exemplify, neural networks can have architectures that train faster when data resembles a Gaussian distribution and the normalization step can transform the numerical vectors to more closely resemble a Gaussian distribution while maintaining the inherent distribution of the data.

Once the machine learning model trainer 309 receives the sample classifications 306, the machine learning model trainer 309 updates model parameters of the candidate machine learning detection model 307 in the form of updated model parameters 308. Although depicted as sending the updated model parameters 308, the machine learning model trainer 309 can directly edit parameters running in place on the candidate machine learning detection model 307. The updated model parameters 308 are determined based on the sample classifications 306, the type of machine learning model being used, and the labels for the samples in the sample classifications 306. The machine learning model trainer 309 compares the sample classifications 306 with the labels for the sample classifications 306 indicating whether the samples are malware and determines the updated model parameters 308 accordingly. For instance, when the candidate machine learning detection model 307 is a neural network, the machine learning model trainer 309 compares probability values for each sample in the sample classifications with the corresponding labels, and backpropagates error comprising the difference between the probability values and the labels (where, for probability values indicating likelihood that samples are malware, a 1 label corresponds to malicious and a 0 label corresponds to benign). The machine learning model trainer 309 continues receiving sample classifications 306 from the candidate machine learning detection model 307, updating the model parameters 308 and then reinputting the training labelled software samples 304 into the candidate machine learning detection model 307 until a training termination criterion is satisfied. For example, the training criterion can be a convergence criterion for the model parameters 308 of the candidate machine learning detection model 307 or a maximum number of training iterations. Once trained, the candidate machine learning detection model 307 is forwarded to a separate testing workflow in the detection model implementation system 300 as the supplemental machine learning model 311.

At stage D, the incumbent machine learning detection model 301 receives testing labelled software samples 310 from the malware detection database 305. The testing labelled software samples 310 can be the same sample type (e.g. PE files) as the training labelled software samples 304. The testing labelled software samples 310 can comprise software samples corresponding to known new malware threats that the incumbent machine learning detection model 301 is not trained to detect. The testing labelled software samples 310 can further comprise malware samples from a variety of malware threats that the firewall 320 can encounter to test the robustness of the tandem incumbent model/supplemental model scheme.

At stage E, the incumbent machine learning detection model 301 receives the testing labelled software samples 310 and generates incumbent predicted samples 316. The incumbent predicted samples 316 comprises probability value outputs of the incumbent machine learning detection model 301 and the corresponding samples from the testing labelled software samples 310 as well as an incumbent threshold benign probability value. The incumbent threshold benign probability value is determined during training of the incumbent machine learning detection model 301 and can be tuned after implementation. The incumbent threshold benign probability value is chosen to maintain a high detection rate with a low false positive rate. For example, the incumbent threshold benign probability value can be initialized at zero and incremented. At each incrementation, an updated detection rate and updated false positive rate for the incumbent machine learning detection model 301 are determined on test data, and once the false positive rate exceeds a threshold acceptable false positive rate or the detection rate dips below a threshold detection rate, the incumbent threshold benign probability value for the previous iteration is chosen. Other methods for determining the incumbent threshold benign probability value can be used.

Although the incumbent machine learning detection model 301 is shown as outputting only the samples classified as benign in the testing labelled software samples 310, all the classified samples can be output. While the supplemental machine learning model 311 will not receive these samples once implemented on the firewall 320, they can be used to determine the detection rate and false positive rate in subsequent operations for tuning the activation range.

At stage F, the supplemental machine learning model 311 receives the incumbent predicted samples 316 and generates the samples classifications 314 using samples in the incumbent predicted samples 316. The activation range tuner 313 receives the sample classifications 314 comprising samples from the incumbent predicted samples 316 as well as the probability value outputs from the supplemental machine learning model 311. The supplemental machine learning model 311 can further indicate a supplemental threshold probability value and the samples in the sample classifications 314 can be labelled as malicious if the corresponding probability values are above the supplemental threshold probability value and as benign if the corresponding probability values are below the supplemental threshold probability value. Alternatively, the supplemental machine learning model 311 can output the label directly or can output a binary value (e.g. "0" or "1") indicating the label of malicious or benign.

The activation range tuner 313 determines an updated detection rate and a false positive rate for the sample classifications 314 corresponding to the conjoined use of the supplemental machine learning model 311 and the incumbent machine learning detection model 301. The detection rate comprises a percentage of the malicious samples as indicated in the testing labelled software samples 310 that are indicated in the sample classifications 314 and can be a detection rate for the incumbent machine learning detection model 301, for the supplemental machine learning model 311, and for the conjoining of these two models. The false positive rate comprises a percentage of the labelled samples classified as malware in the sample classifications 314 that are actually benign. The activation range tuner 313 compares the false positive rate for the sample classifications 314 to a threshold false positive rate. The threshold false positive rate can be determined by a domain level expert based on the acceptable rate of false malware classifications specific to the type of samples and threats being received by the firewall 320. For instance, a firewall 320 configured to detection higher-level threats may accept a higher false positive rate for the tradeoff of a higher detection rate. If the false positive rate is below the threshold false positive rate, the activation range tuner 313 increments the activation range by a predetermined or dynamic amount which has the effect of widening the activation range. Other criterion for the false positive rate can be used and in some embodiments and false positive rate performance criterion for false positives only for the supplemental machine learning model 311 (e.g. a threshold number of false positives for the supplemental machine learning model 311) can be used. The increment can be a small prespecified amount that depends on the available computing resources for tuning the activation range, the desired level of precision for model tuning, the domain of malware threats seen by the firewall 320, etc. Based on changes in the false positive rate between tuning iterations, the increment can either be increased (e.g. if the false positive rate remains relatively constant) or decreased (e.g. if the false positive rate changes significantly). Additionally, the activation range tuner 313 can reject the supplemental machine learning model 311 and/or the incumbent machine learning detection model 301 based on any of the aforementioned detection rates failing a detection rate performance criterion (e.g., a detection rate threshold).

Prior to the operations at stages D, E, and F, the activation range tuner 313 initializes an activation range for the supplemental machine learning model 311. At each iteration, the supplemental machine learning model 311 generates sample classifications 314 based on the updated activation range 312 from the previous iteration. Once the threshold false positive rate is exceeded, the tuned activation range 318 comprises the activation range from the previous iteration. At stage G, the detection model implementation system 300 forwards the tuned activation range 318, the supplemental machine learning model 311, and the incumbent machine learning detection model 301 to the firewall 320 for implementation. The firewall 320 can filter incoming samples using the incumbent machine learning detection model 301 and supplemental machine learning model 311 with the tuned activation range 318 over a variety of domains including a control plane, a data plane, a virtual firewall monitoring network traffic over a distributed system, a personal computer, etc.

The sample classifications 306, 314, the predicted benign samples 316, and any of the aforementioned classifications output by the various supplemental, candidate, and incumbent models can all comprise both labels indicating malware or benign and classification values. The classification values can be confidence values or probability values that indicate a likelihood of the label for the corresponding classification being a correct label for a sample classified by the model that generated the classification value. An activation range as used throughout refers to a range of classification values above a lower limit classification value and below an upper limit classification value.

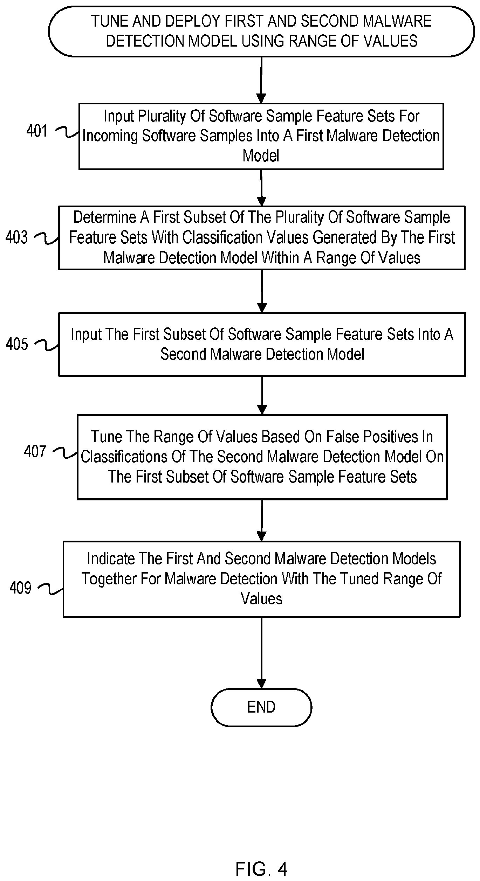

The example operations in Figures 4-9 are described with reference to an activation range tuner and a malware detector for consistency with the earlier figure(s). The name chosen for the program code is not to be limiting on the claims. Structure and organization of a program can vary due to platform, programmer/architect preferences, programming language, etc. In addition, names of code units (programs, modules, methods, functions, etc.) can vary for the same reasons and can be arbitrary.

Figure 4 is a flowchart of example operations for tuning and deploying a first and second malware detection model using a range of values. At block 401, an activation range tuner inputs a plurality of software sample feature sets corresponding to incoming software samples into a first malware detection model to generate classification values. The first malware detection model can additionally generate classifications for the software sample feature sets as malicious or benign using the classification values. Each classification value comprises a likelihood that a sample feature set is benign and samples with classification values above a threshold classification value can be classified as benign, while samples with classification values below the threshold classification value can be classified as malicious.

At block 403, the activation range tuner determines a first subset of the plurality of software sample feature sets that have classification values within a range of values. The range of values comprises an upper limit classification value and a lower limit classification value, wherein the lower limit classification value can be chosen to be the threshold classification value above which the first malware detection model classifies sample feature sets as benign. The activation range tuner indicates sample feature sets with classification values within the range of values for inputting into a second malware detection model.

At block 405, the activation range tuner inputs the first subset of software sample feature sets into a second malware detection model. The activation range tuner can preprocess the first subset of software sample feature sets into a format for inputting into the second malware detection model which can be different from the corresponding format for the first malware detection. The second malware detection model generates classifications for the first subset of software sample feature sets as malicious or benign and can additionally generate classification values indicating a confidence for the classifications.

At block 407, the activation range tuner tunes the range of values based on false positives in classifications of the second malware detection model on the first subset of software sample feature sets. The range of values can be tuned using a false positive (FP) count of the first malware detection model on sample feature sets with classification values outside the range of values combined with an FP count of the second malware detection model on sample feature sets with classification values inside the range of values (i.e. using the classification of the conjoined first and second malware detection models). Alternatively, the FP rates can be calculated for each model individually on the entire dataset which can inform performance criterion for the first and second malware detection models. The activation range tuner evaluates the false positive rates using a false positive rate performance criterion. For instance, the criterion can be one or more threshold false positive rates that each of the calculated false positive rates must exceed. If the false positive rate(s) satisfies the false positive rate performance criterion, the range of values is widened by increasing the upper limit classification value. Otherwise, the range of values is rolled back by decreasing the upper limit classification values to the previous iteration.

At block 409, the activation range tuner indicates the combination of the first and second malware detection models for malware detection using the range of values. The indicating can occur after several iterations of increasing the upper limit classification value of the range of values and verifying that the false positive rates for the combination of first and second malware detection models still satisfy the false positive rate performance criterion. In some embodiments, the first and second malware detection models are additionally verified against a detection rate performance criterion and can be rejected for use if this performance criterion is failed at any of the iterations.

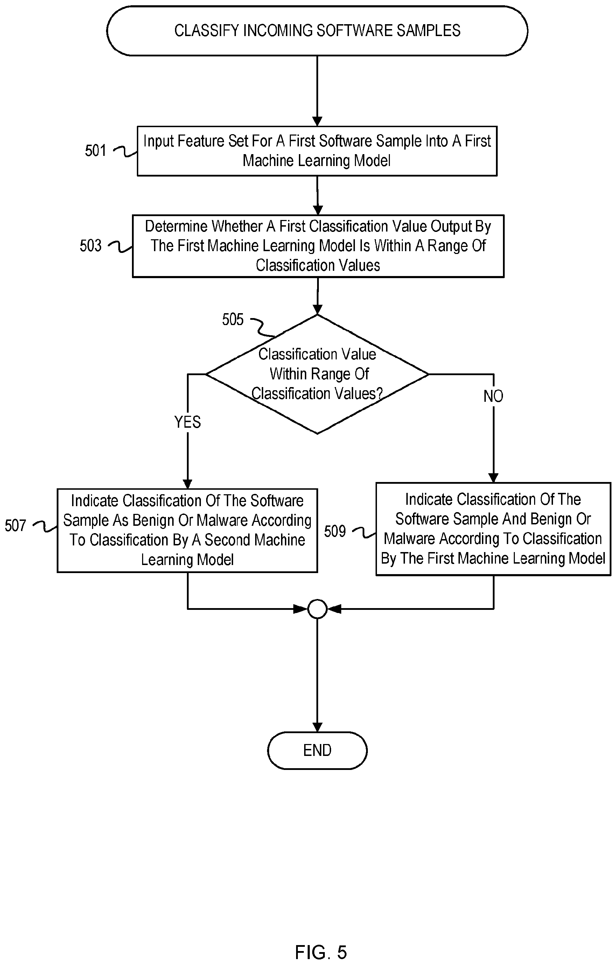

Figure 5 is a flowchart of example operations for classifying incoming software samples. At block 501, a malware detector inputs a feature set for a first software sample into a first machine learning model. The feature set can be preprocessed based on raw sample data for the software sample to be input into the first machine learning model. The first machine learning model generates output comprising a classification value for the software sample that is a confidence level that the software sample is benign and a corresponding classification of the software sample as malicious or benign.

At block 503, the malware detector determines whether the classification value output by the first machine learning model is within a range of classification values. The range of classification values comprises a lower limit classification value and an upper limit classification value, wherein the lower limit classification value can be a threshold classification value for the first machine learning model classifying the software sample as benign. If the classification value is above the lower limit classification value and below the upper limit classification value then the output of the first machine learning model is within the range of classification values.

At block 505, if the classification value is determined by the malware detector to be within the range of classification values, operations proceed to block 507. Otherwise, operations proceed to block 509.

At block 507, the malware detector indicates a classification of the software sample as benign or malware according to a classification of the software sample by a second machine learning model. The malware detector can preprocess the feature set for the software sample for inputting into the second machine learning model and can input the preprocessed feature set into the second machine learning model. The malware detector can subsequently interpret the classification from the second machine learning model as malware or benign and can communicate this classification to a firewall, a virtual machine, etc.

At block 509, the malware detector indicates a classification of the software sample as benign or malware according to a classification of the software sample by the first machine learning model. This classification can be based on the classification value in the output of the first machine learning model being above a threshold classification value for the first machine learning model. If the feature set has a classification value above the threshold classification value then the malware detector can indicate the software sample as benign. Otherwise, the malware detector can indicate the software sample as malicious.

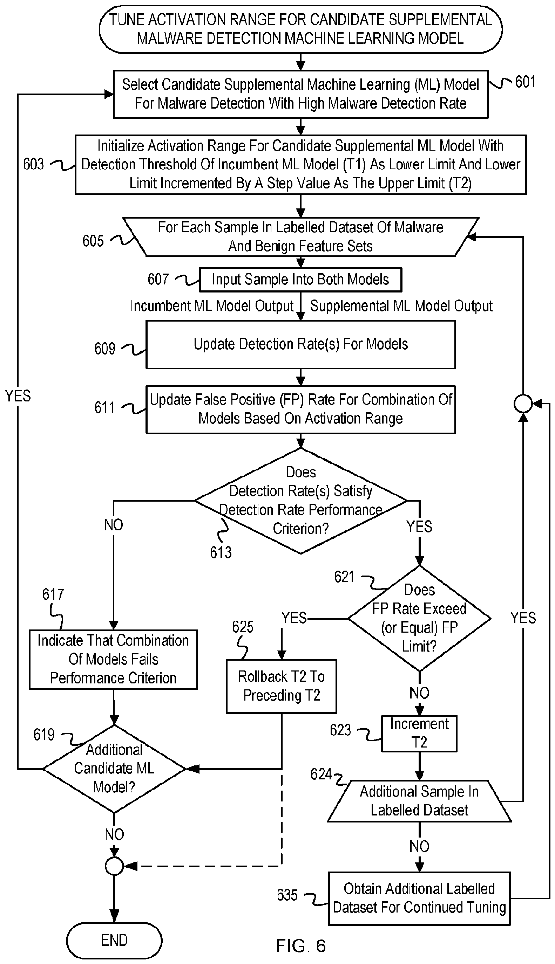

Figures 6-7 are flowcharts of example operations for tuning an activation range for a candidate supplemental malware detection machine learning model. Figure 6 illustrates example operations for this tuning with concurrent model inputs. Tuning the activation range establishes a range of values corresponding to a benign classification by an incumbent malware detection machine learning model ("incumbent ML model") within which classification of a software sample is based on output of the supplemental malware detection machine learning model ("supplemental ML model").

At block 601, an activation range tuner selects a candidate supplemental machine learning (ML) model for malware detection with a high malware detection rate. The candidate supplemental ML model can be tested in a lab for detection rate using a database of known malicious and benign samples. Alternatively, the candidate supplemental ML model can be a malware detection model that is actively implemented in a separate domain and exhibits a high detection rate in that domain. The candidate supplemental ML model can be chosen using, in addition to detection rate, a false positive rate and design considerations including model efficiency, training efficiency, desired detection and false positive rates, available computing resources, etc. For instance, in a system with less available resources a simpler machine learning model that requires less training time (e.g. a support vector machine) can be chosen for the candidate supplemental ML model whereas a system with more resources can choose a ML model that requires more training resources (e.g. a neural network).

At block 603, the activation range tuner initializes an activation range for the candidate supplemental ML model with a lower limit equal to a detection threshold (T1) for an incumbent model and an upper limit (T2) that is T1 incremented by a step value. This detection threshold T1 is a confidence value over which the incumbent model classifies samples as benign and at or below which the incumbent ML model classifies samples as malicious/malware. The step value (and thus initial activation range) can be determined based on a desired training time, a desired accuracy of the activation range, etc. In some embodiments, T1 is chosen to be less than the incumbent ML model detection threshold so as to activate the candidate supplemental ML model on a larger set of samples. This can be performed, for instance, when the desired false positive rate is particularly low.

At block 605, the activation range tuner begins iterating over samples in a labelled dataset of software sample feature sets corresponding to software samples classified as benign and samples classified as malware. The operations in each iteration are described at blocks 607, 609, and 611.

At block 607, the activation range tuner inputs the sample for the current iteration into both the incumbent ML model and the candidate supplemental ML model. Each model generates a classification for the sample as malicious or benign and at least the incumbent ML model also generates a confidence value for the classification. The candidate ML model can additionally generate a confidence value for its' classification which can inform future malware analysis of the sample if the candidate ML model is deployed.

At block 609, the activation range tuner updates the detection rate for the incumbent ML model and the candidate ML model. To update the detection rate, the activation range tuner determines whether the confidence value generated for the sample by the incumbent ML model at block 607 is within the activation range. If it is, then the classification of the candidate supplemental ML model is used (hence, the candidate supplemental ML model is 'activated') to update the detection rate. Otherwise the classification of the incumbent ML model is used to update the detection rate. Updating the detection rate comprises comparing the classification with a label for the sample indicating the sample is malicious or benign based on 'ground truth' or expert domain knowledge.

Additional detection rates for the incumbent ML model and the candidate supplemental ML model individually on all the samples are computed.

At block 611, the activation range tuner updates the false positive (FP) rate for the combination of the candidate supplemental ML model selected at block 601 and the incumbent ML model based on the current activation range. The activation range tuner uses the classification determined at block 609 and, if the classification is malicious but the sample is ground truth benign (as indicated by its' label), the FP rate is increased accordingly. Otherwise, the FP is decreased. Alternatively, the activation range tuner limits calculation of the FP rate to classifications of samples for which the candidate supplemental ML model is activated. In this embodiment, a threshold false positive rate limit to be evaluated at block 621 can be computed using both the false positives of the candidate supplemental ML model and the incumbent ML model.

At block 613, the activation range tuner determines whether the detection rate for the combination of models satisfies a detection rate performance criterion. The detection performance criterion can be whether the detection rate the candidate supplemental ML model, the incumbent ML model, and the conjoined candidate supplemental ML model and incumbent ML model are all above a threshold detection rate defined by the detection rate performance criterion. Alternatively, the detection rate performance criterion can be whether the detection rate for the candidate supplemental ML model (evaluated either for the combination of models or for the candidate supplemental ML model when it is activated) is above a threshold detection rate. If the detection rate performance criterion is satisfied, operations continue to block 621. Otherwise, operations continue to block 617.

At block 617, the activation range tuner indicates that at least one of the incumbent ML model, the candidate supplemental ML model, and the combination of the incumbent ML model and the candidate supplemental ML model fail the performance criterion. The combination of models is subsequently no longer considered for implementation and the activation range is no longer tuned.

At block 619, the activation range tuner determines if there is an additional candidate supplemental ML model. The activation range tuner can maintain a ranked list of candidate ML models based on detection rate, false positive rate, model architecture/simplicity, etc. and can iterate through the ranked list starting at the top to determine the additional candidate supplemental ML model. If the incumbent ML fails the performance criterion at block 617, the activation range tuner can additionally determine if there is an additional incumbent ML model and can begin testing the new incumbent ML model in combination with an additional candidate supplemental ML model. If there is an additional candidate supplemental ML model, operations return to block 601. Otherwise, operations terminate.

At block 621, the activation range tuner determines whether the FP rate for the combination of models exceeds or is equal to an FP limit. The FP limit can be determined, for instance, based on a security level and threat level for remote devices being monitored by the combination of models, domain level expert knowledge, etc. If the FP rate exceeds or is equal to the FP limit, operations proceed to block 625. Otherwise, operations go to block 623.

At block 623, the activation range tuner increments T2. The upper limit can be incremented with a constant step value (e.g. the step value determined for the initial activation range at block 603) or can change dynamically across iterations of blocks 605, 607, 609, 611, and 613. The dynamic changes in the step value when incrementing the upper limit of the activation range can depend on current detection rates or FP rates for the combination of models. For instance, if the FP rate starts to spike, the step value can be decreased to avoid exceeding the FP limit in future iterations.

At block 624, the activation range tuner checks whether there is an additional sample in the labelled dataset. If there is an additional sample, operations return to block 605. Otherwise, operations continue to block 635.

At block 635, the activation range tuner obtains an additional labelled dataset to continue tuning the activation range. The activation range tuner has tuned the activation range with the provided labelled dataset, but T2 is still below the FP limit.

If the activation range tuner determined that the FP rate exceeds or is equal to the FP limit, the activation range tuner rolls back T2 to the preceding T2 determined at the previous iteration of block 623. The updated upper limit ensures that the FP rate for the combination of models has an FP rate less than the FP limit for the corresponding update activation range. Operations proceed to block 619. Embodiments can terminate evaluation of candidate supplemental ML models after block 625.

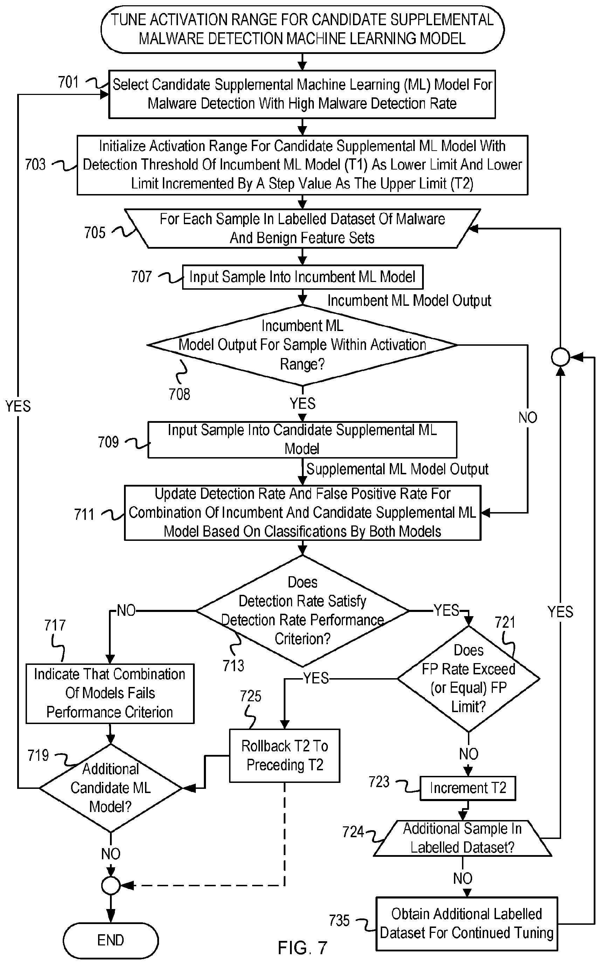

In contrast to Figure 6, Figure 7 is a flowchart of example operations for tuning an activation range after filtering of samples based on output of the incumbent ML model. For brevity, descriptions of example operations illustrated in Figure 6 that are substantially similar to example operations illustrated in Figure 7 are not repeated. Blocks 701, 703, 705, 717, 719, 721, 723, 724, 725, and 735 are substantially similar to blocks 601, 603, 605, 617, 619, 621, 623, 624, 625, and 635, respectively. Thus, only blocks 707, 708, 709, and 711 are described.

At block 707, the activation range tuner inputs the sample at the current iteration (705) into an incumbent ML model. The incumbent ML model generates model output comprising a confidence value that indicates a likelihood the sample is benign and a corresponding classification of whether the sample is malicious or benign.

At block 708, the activation range tuner determines whether the model output generated at block 707 is within the activation range. The activation range is defined by T1 and T2. If the model output is within the activation range, operations proceed to block 709. Otherwise, operations skip to block 711 to update performance statistics.

At block 709, the activation range tuner inputs the sample of the current iteration determined to have an incumbent ML model output value within the activation range into the candidate supplemental ML model. The candidate supplemental ML model generates a supplemental classification for the sample. In some embodiments, the candidate supplemental ML model additionally generates a confidence value indicating a likelihood that the sample is benign. The candidate supplemental ML model can compare this confidence value against a threshold hold confidence value to determine the final classification. Alternatively, the candidate supplemental ML model can be a machine learning model that does not generate probability or confidence values that a classification is correct (e.g. a support vector machine that does generate a confidence value).

At block 711, the activation range tuner updates a detection rate and false positive rate for the combination of the incumbent and candidate supplemental ML model based on the supplemental classification generated by the candidate supplemental ML model and the incumbent classification generated by the incumbent ML model. The activation range tuner can additionally generate an aggregated confidence value for the candidate supplemental ML model and the incumbent ML model individually and/or in combination and can update these aggregated values if the supplemental and/or incumbent ML model generates a confidence value. This aggregated confidence value can be used to inform performance criteria for the candidate supplemental ML model, and candidate supplemental ML models with low aggregated confidence scores can be rejected.

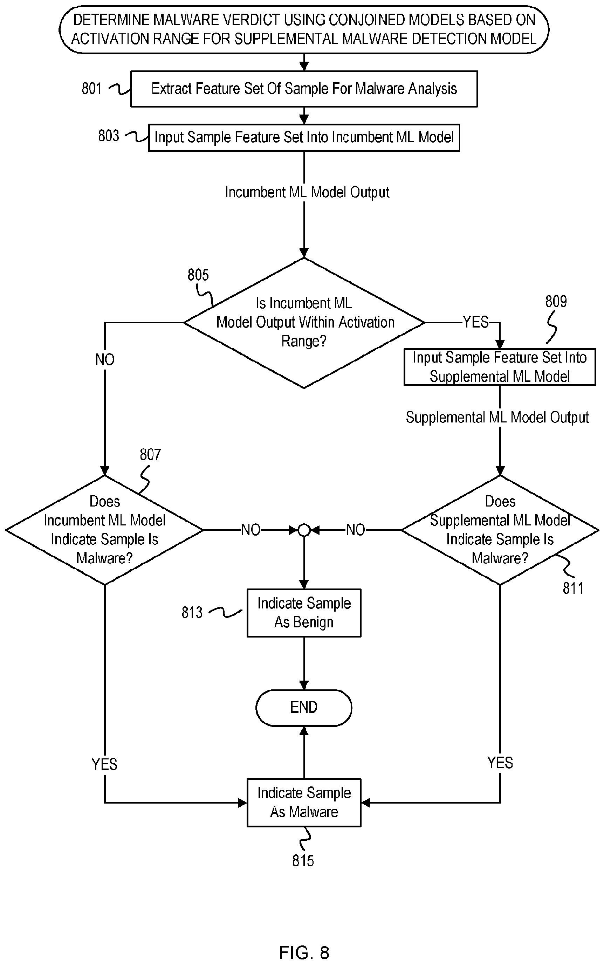

Figures 8-9 are flowcharts of example operations for determining a malware verdict using conjoined ML models. Figure 8 is a flowchart for determining the malware verdict with the ML models serially conjoined.

At block 801, a malware detector extracts a feature set from a sample for malware analysis. The sample can originate from a remote device or cloud storage system and can be in a variety of formats such as an executable file, a link, a data packet, object code, compiled machine code, etc. The malware detector can parse the sample to extract tokens, can embed the tokens as a numerical vector using natural language processing, and can normalize the numerical vector for inputting into the incumbent ML model and supplemental ML model. In some embodiments where the two ML models have different input formats, the malware detector can generate a compatible feature set for each model.

At block 803, the malware detector inputs the sample feature set into the incumbent model. The incumbent model generates a classification of malicious or benign based on the sample feature set and a confidence value that indicates a likelihood that the sample feature set corresponds to a benign sample.

At block 805, the malware detector determines whether the incumbent ML model output is within an activation range. The activation range comprises a lower limit and an upper limit, and the determination comprises determining whether the confidence value generated as a result of inputting the sample feature set into the incumbent ML model is within the activation range. Embodiments can define "within" the activation range as exclusive of the limits, inclusive of the limits, or inclusive of one of the limits and exclusive of the other limit. If the malware detector determines the incumbent ML model classification is within the activation range, operations proceed to block 809. Otherwise, operations proceed to block 807.

At block 807, the malware detector determines whether the incumbent ML model indicates the sample is malware. If the malware detector determines that the incumbent model indicates the sample is malware, operations proceed to block 815. Otherwise, operations proceed to block 813.

At block 809, the malware detector inputs the sample feature set into the supplemental ML model. The supplemental ML model generates a classification that the sample is malicious or benign. The supplemental ML model can additionally generate a confidence value for the classification that can inform future analysis of the sample subsequent to the operations in Figure 8.

At block 811, the malware detector determines whether the supplemental ML model indicates the sample is malware. This determination is based on the classification for the sample generated by the supplemental ML model as a result of block 809. If the malware detector determines that the supplemental ML model indicates the sample is malware (i.e. the classification is malicious), operations proceed to block 815. Otherwise, operations proceed to block 813.

At block 813, the malware detector indicates the sample is benign. The malware detector can communicate this verdict, the sample, and/or a confidence value for the verdict to a separate component. The separate component can be a firewall running natively on a remote device, across a cloud network, etc. Depending on the confidence value for the classification, the malware detector can forward the sample to an additional malware analysis component to confirm the benign verdict.

At block 815, the malware detector indicates the sample is malware. As above, the malware detector can communicate this verdict, the sample, and/or a confidence value for the verdict to a separate component. The separate component can be an additional malware detector that can confirm the malware verdict, a malware database for future training/threat identification, etc.

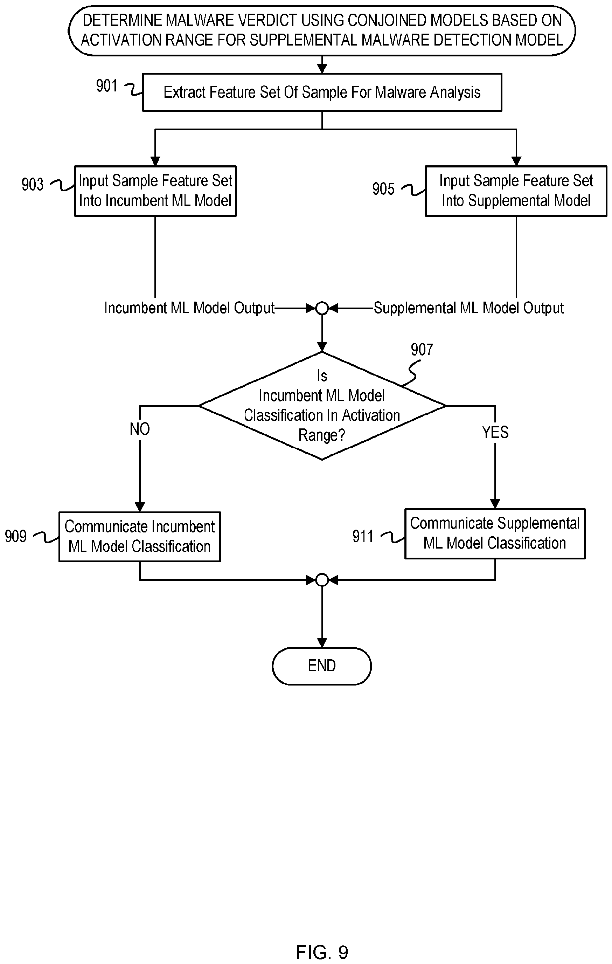

Figure 9 is a flowchart of example operations for determining a malware verdict with the ML models conjoined in parallel. While the operations of Figure 9 are similar to those of Figure 8, the parallel architecture of the conjoined models yields a different execution path.

At block 901, a malware detector extracts a feature set of a sample for malware analysis. This operation can be substantially similar to block 801 of Figure 8.

At block 903, the malware detector inputs the sample feature set into the incumbent ML model. Concurrently, the malware detector inputs the sample feature set into the supplemental ML model at block 905. As with Figure 8, the input feature sets can vary depending on whether the model compatibility resulted in variance between the feature sets. The malware detector can invoke or call an application programming interface (API) defined functions to pass the sample feature set to the ML models. As another example, the malware detector can call library functions or standalone programs that implement the ML models.

At block 907, the malware detector receives the incumbent ML model classification and supplemental ML model classification generated by the ML models and determines whether the incumbent ML model classification is within the activation range. For instance, the malware detector determines whether the confidence value in the incumbent ML model output is above a lower limit of the activation range and below an upper limit of the activation range. If the incumbent ML model output is in the activation range, operations proceed to block 911. Otherwise, operations proceed to block 909.

At block 909, the malware detector communicates the incumbent ML model output to a separate component. The separate component can be an additional malware detector, a virtual machine, a firewall running on a remote device or across a network, a remote device, a node in a network, database etc. The malware detector can communicate the classification generated by the incumbent ML model (i.e. malware or benign) and can additionally communicate the confidence value associated with the classification for future analysis.

At block 911, the malware detector communicates the supplemental ML model output to a separate component. The separate component can be any of the embodiments listed above at block 909. The malware detector can communicate the classification generated by the supplemental ML model at and can communicate a confidence value associated with the classification if it exists.

The flowcharts are provided to aid in understanding the illustrations and are not to be used to limit scope of the claims. The flowcharts depict example operations that can vary within the scope of the claims. Additional operations may be performed; fewer operations may be performed; the operations may be performed in parallel; and the operations may be performed in a different order. With respect to Figures 5 and 6, embodiments do not necessarily tune activation ranges of multiple candidate supplemental malware detection models. It will be understood that each block of the flowchart illustrations and/or block diagrams, and combinations of blocks in the flowchart illustrations and/or block diagrams, can be implemented by program code. The program code may be provided to a processor of a general-purpose computer, special purpose computer, or other programmable machine or apparatus.

As will be appreciated, aspects of the disclosure may be embodied as a system, method or program code/instructions stored in one or more machine-readable media. Accordingly, aspects may take the form of hardware, software (including firmware, resident software, micro-code, etc.), or a combination of software and hardware aspects that may all generally be referred to herein as a "circuit," "module" or "system." The functionality presented as individual modules/units in the example illustrations can be organized differently in accordance with any one of platform (operating system and/or hardware), application ecosystem, interfaces, programmer preferences, programming language, administrator preferences, etc.

Any combination of one or more machine-readable medium(s) may be utilized. The machine-readable medium may be a machine-readable signal medium or a machine-readable storage medium. A machine-readable storage medium may be, for example, but not limited to, a system, apparatus, or device, that employs any one of or combination of electronic, magnetic, optical, electromagnetic, infrared, or semiconductor technology to store program code. More specific examples (a non-exhaustive list) of the machine-readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a machine-readable storage medium may be any tangible medium that can contain or store a program for use by or in connection with an instruction execution system, apparatus, or device. A machine-readable storage medium is not a machine-readable signal medium.

A machine-readable signal medium may include a propagated data signal with machine-readable program code embodied therein, for example, in baseband or as part of a carrier wave. Such a propagated signal may take any of a variety of forms, including, but not limited to, electro-magnetic, optical, or any suitable combination thereof. A machine-readable signal medium may be any machine-readable medium that is not a machine-readable storage medium and that can communicate, propagate, or transport a program for use by or in connection with an instruction execution system, apparatus, or device.

Program code embodied on a machine-readable medium may be transmitted using any appropriate medium, including but not limited to wireless, wireline, optical fiber cable, RF, etc., or any suitable combination of the foregoing.

The program code/instructions may also be stored in a machine-readable medium that can direct a machine to function in a particular manner, such that the instructions stored in the machine-readable medium produce an article of manufacture including instructions which implement the function/act specified in the flowchart and/or block diagram block or blocks.

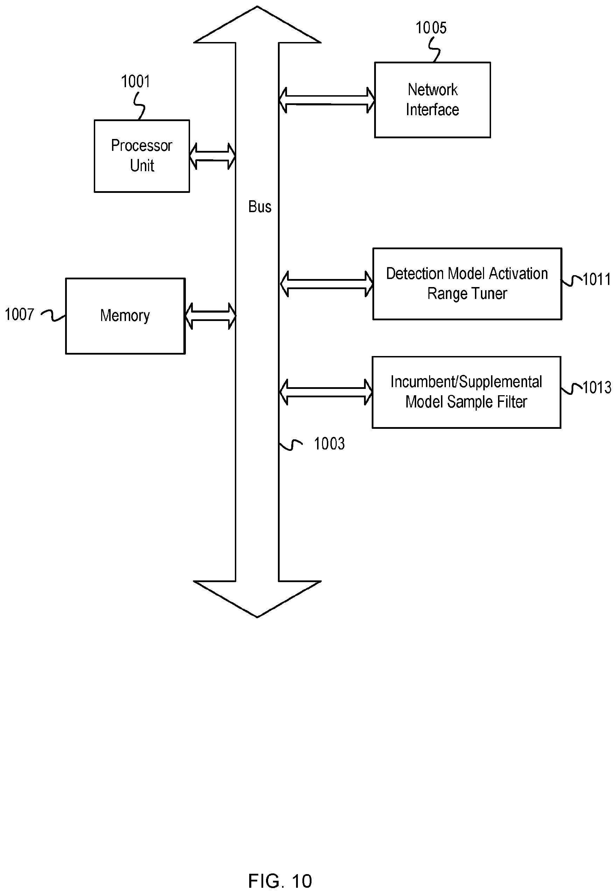

Figure 10 depicts an example computer system with a detection model activation range tuner and an incumbent/supplemental model sample filter. The computer system includes a processor 1001 (possibly including multiple processors, multiple cores, multiple nodes, and/or implementing multi-threading, etc.). The computer system includes memory 1007. The memory 1007 may be system memory or any one or more of the above already described possible realizations of machine-readable media. The computer system also includes a bus 1003 and a network interface 1005. The system also includes a detection model activation range tuner 1011 and an incumbent/supplemental model sample filter 1013. The detection model activation range tuner 1011 can tune the activation range of a candidate model based on the false positive rate of malware classifications by the candidate model on outputs of an incumbent model classified as benign, as described variously above. The incumbent/supplemental model sample filter 1013 can input samples with probability value outputs from an incumbent model within an activation range into a supplemental model and can classify additional samples as malicious based on malicious classifications by the incumbent model, as described variously above. Any one of the previously described functionalities may be partially (or entirely) implemented in hardware and/or on the processor 1001. For example, the functionality may be implemented with an application specific integrated circuit, in logic implemented in the processor 1001, in a co-processor on a peripheral device or card, etc. Further, realizations may include fewer or additional components not illustrated in Figure 10 (e.g., video cards, audio cards, additional network interfaces, peripheral devices, etc.). The processor unit 1001 and the network interface 1005 are coupled to the bus 1003. Although illustrated as being coupled to the bus 1003, the memory 1007 may be coupled to the processor 1001.

While the aspects of the disclosure are described with reference to various implementations and exploitations, it will be understood that these aspects are illustrative and that the scope of the claims is not limited to them. In general, techniques for tuning an activation range for a candidate model based on a false positive classification rate of the combined candidate and incumbent models as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the disclosure. In general, structures and functionality presented as separate components in the example configurations may be implemented as a combined structure or component. Similarly, structures and functionality presented as a single component may be implemented as separate components. These and other variations, modifications, additions, and improvements may fall within the scope of the disclosure.

Terminology

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

**Claims**

1. A computer-implemented method comprising: determining (403) a first subset of a plurality of software sample feature sets associated with classification values generated by a first malware detection model that are within a range of values;

   inputting (405) the first subset of software sample feature sets into a second malware detection model;
   tuning (407) the range of values based, at least in part, on false positives of classifications by the second malware detection model of the first subset of software sample feature sets; and
   indicating (409) the first and the second malware detection models together for malware detection with the tuned range of values, wherein malware detection is based on output of the second malware detection model if output of the first malware detection model is within the tuned range of values and malware detection is based on output of the first malware detection model if output of the first malware detection model is outside of the tuned range of values.

2. The computer-implemented method of claim 1, wherein tuning the range of values comprises iteratively updating a first limit to widen the range of values until a false positive rate does not satisfy a false positive rate performance criterion, wherein the false positive rate is calculated, at least partly, on the false positives by the second malware detection model, and optionally wherein iteratively updating the first limit to widen the range of values comprises increasing the first limit by a step value.

3. The computer-implemented method of claim 2, further comprising, based on determining that the false positive rate calculated for a current iteration fails to satisfy the false positive rate performance criterion, rolling back the first limit to the first limit as updated in a preceding iteration.

4. The computer-implemented method of claim 1, further comprising:
   updating a detection rate based, at least in part, on outputs of the first and the second malware detection models;

   after each updating of the detection rate, determining whether the updated detection rate satisfies a detection rate performance criterion; and
   based on a determination that the updated detection rate fails the detection rate performance criterion, rejecting the second malware detection model for malware detection.

5. The computer-implemented method of claim 1, wherein each of the plurality of software sample feature sets have been previously labelled as benign or malware.

6. The computer-implemented method of claim 1, further comprising inputting the plurality of software sample feature sets into the first malware detection model to obtain the classification values generated by the first malware detection model, and optionally wherein the classification values comprise confidence levels.

7. The computer-implemented method of claim 1, further comprising:

   initializing a first limit of the range of values to a value greater than a malware detection threshold of the first malware detection model; and optionally
   initializing a second limit of the range of values based, at least in part, on the malware detection threshold of the first malware detection model.

8. The computer-implemented method of claim 1, further comprising identifying the second malware detection model based on the second malware detection model having a detection rate greater than the first malware detection model and a standalone false positive rate greater than the first malware detection model.

9. The computer-implemented method of claim 1, wherein tuning the range of values is also based on false positives of classifications by the first malware detection model of a second subset of the plurality of software sample feature sets, wherein the second subset of software sample feature sets are outside of the range of values.

10. The computer-implemented method of claim 9, further comprising calculating a false positive rate for the first and second malware detection models in combination based, at least in part, on the false positives by both malware detection models, wherein tuning the range of values based on the false positives by the first and second malware detection models comprises tuning the range of values based on the false positive rate with respect to a false positive rate threshold.

11. A non-transitory, machine-readable medium having instructions stored thereon that are executable by a computing device to perform operations comprising:

   inputting (501) a feature set of a first software sample into a first machine learning model, determining whether a first classification value output by the first machine learning model for the first software sample is within a range of classification values,
   wherein the range of classification values has been tuned based, at least in part, on false positives of classifications by a second machine learning model of a training set of software sample feature sets;
   based on a determination (507) that the first classification value is within the range of classification values, indicating classification of the first software sample as benign or malware according to classification of the first software sample by the second machine learning model; and
   based on a determination (509) that the first classification value is outside of the range of classification values, indicating classification of the first software sample as benign or malware according to classification of the first software sample by the first machine learning model.

12. The machine-readable medium of claim 11, further comprising instructions executable by the computing device to, based on a determination that the first classification value is within the range of classification values, input the feature set into the second machine learning model; and optionally select, for classification of the first software sample as malware or benign, between output of the first machine learning model and the second machine learning model based on the determination of whether the first classification value output by the first machine learning model is within the range of classification values.

**13.** An apparatus (201) comprising:

a processor; and
a machine-readable medium having instructions stored thereon that are executable by the processor to cause the apparatus to,
determine a first subset of a plurality of classification values generated by a first machine learning model that are within a range of classification values, wherein the plurality of classification values corresponds to sample classifications of malware and benign;
input software sample feature sets corresponding to the first subset of the plurality of classification values into a second machine learning model;
update the range of classification values based, at least in part, on false positives of classifications by the second machine learning model of the first subset of the plurality of classification values; and
indicate the first and the second machine learning models together for malware detection with the updated range of classification values, wherein malware detection is based on output of the second machine learning model if output of the first machine learning model is within the updated range of classification values and malware detection is based on output of the first machine learning model if output of the first machine learning model is outside of the updated range of classification values.

**14.** The apparatus of claim 13, wherein the instructions to update the range of classification values comprise instructions executable by the processor to cause the apparatus to iteratively update a first limit to widen the range of classification values until a false positive rate does not satisfy a false positive rate performance criterion, wherein the false positive rate is calculated based, at least in part, on false positives by the second malware detection model; and, optionally, based on a determination that the false positive rate calculated for a current iteration fails to satisfy the false positive rate performance criterion, roll back the first limit to the first limit as updated in a preceding iteration.

**15.** The apparatus of claim 13, wherein the machine-readable medium further comprises instructions executable by the processor to cause the apparatus to initialize an upper limit of the range of classification values to a value greater than a malware detection threshold of the first machine learning model.

**Patentansprüche**

**1.** Computerimplementiertes Verfahren, umfassend ein Bestimmen (403) eines ersten Untersatzes einer Vielzahl von Softwareprobenmerkmalssätzen, die Klassifizierungswerten, die durch ein erstes Malware-Erkennungsmodell erzeugt werden, die innerhalb eines Wertebereichs liegen, zugeordnet sind;

Eingeben (405) des ersten Untersatzes von Softwareprobenmerkmalssätzen in ein zweites Malware-Erkennungsmodell;
Abstimmen (407) des Wertebereichs basierend, mindestens teilweise, auf falsch-positiven Ergebnissen von Klassifizierungen durch das zweite Malware-Erkennungsmodell des ersten Untersatzes von Softwareprobenmerkmalssätzen; und Anzeigen (409)
des ersten und des zweiten Malware-Erkennungsmodells zusammen für eine Malware-Erkennung mit dem abgestimmten Wertebereich, wobei die Malware-Erkennung auf einer Ausgabe des zweiten Malware-Erkennungsmodells basiert, falls die Ausgabe des ersten Malware-Erkennungsmodells innerhalb des abgestimmten Wertebereichs liegt, und die Malware-Erkennung auf der Ausgabe des ersten Malware-Erkennungsmodells basiert, falls die Ausgabe des ersten Malware-Erkennungsmodells außerhalb des abgestimmten Wertebereichs liegt.

**2.** Computerimplementiertes Verfahren nach Anspruch 1, wobei das Abstimmen des Wertebereichs ein iteratives Aktualisieren einer ersten Grenze umfasst, um den Wertebereich zu erweitern, bis eine Falsch-Positiv-Rate ein Falsch-Positiv-Ratenleistungskriterium nicht erfüllt, wobei die Falsch-Positiv-Rate mindestens teilweise auf den falsch-positiven Ergebnissen durch das zweite Malware-Erkennungsmodell berechnet wird und wobei optional das iterative Aktualisieren der ersten Grenze, um den Wertebereich zu erweitern, ein Erhöhen der ersten Grenze um einen Schrittwert umfasst.

**3.** Computerimplementiertes Verfahren nach Anspruch 2, ferner umfassend, basierend auf dem Bestimmen, dass die Falsch-Positiv-Rate, die für eine aktuelle Iteration berechnet wird, daran scheitert, das Falsch-Positiv-Ratenleistungskriterium zu erfüllen, ein Zurücksetzen der ersten Grenze auf die erste Grenze, wie sie in einer vorhergehenden Iteration aktualisiert wurde.

**4.** Computerimplementiertes Verfahren nach Anspruch 1, ferner umfassend:

Aktualisieren einer Erkennungsrate basierend, mindestens teilweise, auf den Ausgaben des ersten und des zweiten Malware-Erkennungsmodells;

nach jedem Aktualisieren der Erkennungsrate, Bestimmen, ob die aktualisierte Erkennungsrate ein Erkennungsratenleistungskriterium erfüllt; und

basierend auf einer Bestimmung, dass die aktualisierte Erkennungsrate an dem Erkennungsratenleistungskriterium scheitert, Ablehnen des zweiten Malware-Erkennungsmodells für die Malware-Erkennung.

5. Computerimplementiertes Verfahren nach Anspruch 1, wobei jeder der Vielzahl von Softwareprobenmerkmalssätzen zuvor als gutartig oder Malware gekennzeichnet worden ist.

6. Computerimplementiertes Verfahren nach Anspruch 1, ferner umfassend das Eingeben der Vielzahl von Softwareprobenmerkmalssätzen in das erste Malware-Erkennungsmodell, um die Klassifizierungswerte, die durch das erste Malware-Erkennungsmodell erzeugt werden, zu erhalten und optional, wobei die Klassifizierungswerte Konfidenzniveaus umfassen.

7. Computerimplementiertes Verfahren nach Anspruch 1, ferner umfassend:

Initialisieren einer ersten Grenze des Wertebereichs auf einen Wert, der größer als eine Malware-Erkennungsschwelle des ersten Malware-Erkennungsmodells ist; und optional

Initialisieren einer zweiten Grenze des Wertebereichs, basierend, mindestens teilweise, auf der Malware-Erkennungsschwelle des ersten Malware-Erkennungsmodells.

8. Computerimplementiertes Verfahren nach Anspruch 1 ferner umfassend ein Identifizieren des zweiten Malware-Erkennungsmodells basierend darauf, dass das zweite Malware-Erkennungsmodell eine größere Erkennungsrate als das erste Malware-Erkennungsmodell und eine größere eigenständige Falsch-Positiv-Rate als das erste Malware-Erkennungsmodell aufweist.

9. Computerimplementiertes Verfahren nach Anspruch 1, wobei das Abstimmen des Wertebereichs ebenso auf falsch-positiven Ergebnissen von Klassifizierungen durch das erste Malware-Erkennungsmodell eines zweiten Untersatzes der Vielzahl von Softwareprobenmerkmalssätzen basiert, wobei der zweite Untersatz von Softwareprobenmerkmalssätzen außerhalb des Wertebereichs liegt.

10. Computerimplementiertes Verfahren nach Anspruch 9, ferner umfassend ein Berechnen einer Falsch-Positiv-Rate für das erste und das zweite Malware-Erkennungsmodell in Kombination basierend, mindestens teilweise, auf den falsch-positiven Ergebnissen durch beide Malware-Erkennungsmodelle, wobei das Abstimmen des Wertebereichs basierend auf den falsch-positiven Ergebnissen durch das erste und das zweite Malware-Erkennungsmodell das Abstimmen des Wertebereichs basierend auf der Falsch-Positiv-Rate in Bezug auf eine Falsch-Positiv-Ratenschwelle umfasst.

11. Nichtflüchtiges, maschinenlesbares Medium, das darauf gespeicherte Anweisungen aufweist, die durch eine Rechenvorrichtung ausführbar sind, um Operationen durchzuführen, umfassend:

Eingeben (501) eines Merkmalssatzes einer ersten Softwareprobe in ein erstes Maschinenlernmodell;

Bestimmen, ob ein erster Klassifizierungswert, der durch das erste Maschinenlernmodell für die erste Softwareprobe ausgegeben wird, innerhalb eines Klassifizierungswertebereichs liegt, wobei der Klassifizierungswertebereich basierend, mindestens teilweise, auf falsch-positiven Ergebnissen von Klassifizierungen durch ein zweites Maschinenlernmodell eines Trainingssatzes von Softwareprobenmerkmalssätzen abgestimmt wurde;

basierend auf einer Bestimmung (507), dass der erste Klassifizierungswert innerhalb des Klassifizierungswertebereichs liegt, Angeben der Klassifizierung der ersten Softwareprobe als gutartig oder Malware gemäß der Klassifizierung der ersten Softwareprobe durch das zweite Maschinenlernmodell; und

basierend auf einer Bestimmung (509), dass der erste Klassifizierungswert außerhalb des Klassifizierungswertebereichs liegt, Angeben der Klassifizierung der ersten Softwareprobe als gutartig oder Malware gemäß der Klassifizierung der ersten Softwareprobe durch das erste Maschinenlernmodell.

12. Maschinenlesbares Medium nach Anspruch 11, ferner umfassend Anweisungen, die durch die Rechenvorrichtung ausführbar sind, um basierend auf einer Bestimmung, dass der erste Klassifizierungswert innerhalb des Klassifizierungswertebereichs liegt, den Merkmalssatz in das zweite Maschinenlernmodell einzugeben; und optional, für die Klassifizierung der ersten Softwareprobe als Malware oder gutartig, zwischen der Ausgabe des ersten Maschinenlernmodells und des zweiten Maschinenlernmodells basierend auf der Bestimmung, ob der erste Klassifizierungswert, der durch das erste Maschinenlernmodell ausgegeben wird, innerhalb des Klassifizierungswertebereichs liegt, auszuwählen.

**13.** Einrichtung (201), umfassend:

einen Prozessor; und
ein maschinenlesbares Medium, das darauf gespeicherte Anweisungen aufweist, die durch den Prozessor ausführbar sind, um die Einrichtung zu veranlassen zum
Bestimmen eines ersten Untersatzes einer Vielzahl von Klassifizierungswerten, die durch ein erstes Maschinenlernmodell erzeugt werden, die innerhalb eines Klassifizierungswertebereichs liegen, wobei die Vielzahl von Klassifizierungswerten Probenklassifizierungen von Malware und gutartig entsprechen;
Eingeben von Softwareprobenmerkmalssätzen, die dem ersten Untersatz der Vielzahl von Klassifizierungswerten entsprechen, in ein zweites Maschinenlernmodell;
Aktualisieren des Klassifizierungswertebereichs basierend, mindestens teilweise, auf falsch-positiven Ergebnissen von Klassifizierungen durch das zweite Maschinenlernmodell des ersten Untersatzes der Vielzahl von Klassifizierungswerten; und
Angeben des ersten und des zweiten Maschinenlernmodells zusammen für die Malware-Erkennung mit dem aktualisierten Klassifizierungswertebereich, wobei die Malware-Erkennung auf der Ausgabe des zweiten Maschinenlernmodells basiert, falls die Ausgabe des ersten Maschinenlernmodells innerhalb des aktualisierten Klassifizierungswertebereichs liegt, und die Malware-Erkennung auf der Ausgabe des ersten Maschinenlernmodells basiert, falls die Ausgabe des ersten Maschinenlernmodells außerhalb des aktualisierten Klassifizierungswertebereichs liegt.

**14.** Einrichtung nach Anspruch 13, wobei die Anweisungen, um den Klassifizierungswertebereich zu aktualisieren, Anweisungen umfassen, die durch den Prozessor ausführbar sind, um die Einrichtung zu veranlassen, eine erste Grenze iterativ zu aktualisieren, um den Klassifizierungswertebereich zu erweitern, bis eine Falsch-Positiv-Rate ein Falsch-Positiv-Ratenleistungskriterium nicht erfüllt, wobei die Falsch-Positiv-Rate basierend, mindestens teilweise, auf falsch-positiven Ergebnissen durch das zweite Malware-Erkennungsmodell berechnet wird; und, optional, basierend auf einer Bestimmung, dass die Falsch-Positiv-Rate, die für eine aktuelle Iteration berechnet wird, daran scheitert, das Falsch-Positiv-Ratenleistungskriterium zu erfüllen, die erste Grenze auf die erste Grenze, wie sie in einer vorhergehenden Iteration aktualisiert wurde, zurückzusetzen.

**15.** Einrichtung nach Anspruch 13, wobei das maschinenlesbare Medium ferner Anweisungen umfasst, die durch den Prozessor ausführbar sind, um die Einrichtung zu veranlassen, eine obere Grenze des Klassifizierungswertebereichs auf einen Wert, der größer als eine Malware-Erkennungsschwelle des ersten Maschinenlernmodells ist, zu initialisieren.

**Revendications**

**1.** Procédé mis en oeuvre par ordinateur comprenant la détermination (403) d'un premier sous-ensemble d'une pluralité d'ensembles de caractéristiques d'échantillons de logiciels associés à des valeurs de classification générées par un premier modèle de détection de logiciels malveillants qui se situent dans une plage de valeurs ;

l'introduction (405) du premier sous-ensemble d'ensembles de caractéristiques d'échantillons de logiciels dans un second modèle de détection de logiciels malveillants ;
l'ajustement (407) de la plage de valeurs sur la base, au moins en partie, de faux positifs des classifications par le second modèle de détection de logiciels malveillants du premier sous-ensemble d'ensembles de caractéristiques d'échantillons de logiciels ; et
l'indication (409) aux premier et second modèles de détection de logiciels malveillants ensemble de la détection de logiciels malveillants avec la plage de valeurs ajustée, dans lequel la détection de logiciels malveillants est basée sur le résultat du second modèle de détection de logiciels malveillants si le résultat du premier modèle de détection de logiciels malveillants se situe dans la plage de valeurs ajustée et la détection de logiciels malveillants est basée sur le résultat du premier modèle de détection de logiciels malveillants si le résultat du premier modèle de détection de logiciels malveillants se situe en dehors de la plage de valeurs ajustée.

**2.** Procédé mis en oeuvre par ordinateur selon la revendication 1, dans lequel l'ajustement de la plage de valeurs comprend la mise à jour itérative d'une première limite afin d'élargir la plage de valeurs jusqu'à ce qu'un taux de faux positifs ne satisfasse pas un critère de performance du taux de faux positifs, dans lequel le taux de faux positifs est calculé, au moins en partie, sur les faux positifs du second modèle de détection de logiciels malveillants, et éventuellement, dans lequel la mise à jour itérative de la première limite afin d'élargir la plage de valeurs comprend l'augmentation de la première limite d'une valeur d'incrément.

**3.** Procédé mis en oeuvre par ordinateur selon la revendication 2, comprenant en outre, sur la base du fait de déterminer que le taux de faux positifs calculé pour une itération en cours ne satisfait pas le critère de performance du taux de faux positifs, le retour de la première limite à la première limite telle qu'elle a été mise à jour lors d'une itération précédente.

4. Procédé mis en oeuvre par ordinateur selon la revendication 1, comprenant en outre :

la mise à jour d'un taux de détection sur la base, au moins en partie, de résultats des premier et second modèles de détection de logiciels malveillants ;
après chaque mise à jour du taux de détection, le fait de déterminer si le taux de détection mis à jour satisfait ou non un critère de performance du taux de détection ; et
sur la base du fait de déterminer que le taux de détection mis à jour ne satisfait pas le critère de performance du taux de détection, le rejet du second modèle de détection de logiciels malveillants pour la détection de logiciels malveillants.

5. Procédé mis en oeuvre par ordinateur selon la revendication 1, dans lequel chacun de la pluralité d'ensembles de caractéristiques d'échantillons de logiciels a été préalablement étiqueté comme inoffensif ou malveillant.

6. Procédé mis en oeuvre par ordinateur selon la revendication 1, comprenant en outre l'introduction de la pluralité d'ensembles de caractéristiques d'échantillons de logiciels dans le premier modèle de détection de logiciels malveillants afin d'obtenir les valeurs de classification générées par le premier modèle de détection de logiciels malveillants et dans lequel, éventuellement, dans lequel les valeurs de classification comprennent des niveaux de confiance.

7. Procédé mis en oeuvre par ordinateur selon la revendication 1, comprenant en outre :

l'initialisation d'une première limite de la plage de valeurs à une valeur supérieure à un seuil de détection de logiciels malveillants du premier modèle de détection de logiciels malveillants ; et éventuellement,
l'initialisation d'une seconde limite de la plage de valeurs sur la base, au moins en partie, du seuil de détection des logiciels malveillants du premier modèle de détection des logiciels malveillants.

8. Procédé mis en oeuvre par ordinateur selon la revendication 1, comprenant en outre l'identification du second modèle de détection de logiciels malveillants sur la base du fait que le second modèle de détection de logiciels malveillants a un taux de détection supérieur au premier modèle de détection de logiciels malveillants et un taux de faux positifs autonome supérieur au premier modèle de détection de logiciels malveillants.

9. Procédé mis en oeuvre par ordinateur selon la revendication 1, dans lequel l'ajustement de la plage de valeurs est également basé sur des faux positifs des classifications par le premier modèle de détection de logiciels malveillants d'un second sous-ensemble de la pluralité d'ensembles de caractéristiques d'échantillons de logiciels, dans lequel le second sous-ensemble d'ensembles de caractéristiques d'échantillons de logiciels se situe en dehors de la plage de valeurs.

10. Procédé mis en oeuvre par ordinateur selon la revendication 9, comprenant en outre le calcul d'un taux de faux positifs pour les premier et second modèles de détection de logiciels malveillants combinés sur la base, au moins en partie, des faux positifs des deux modèles de détection de logiciels malveillants, dans lequel l'ajustement de la plage de valeurs sur la base des faux positifs des premier et second modèles de détection de logiciels malveillants comprend l'ajustement de la plage de valeurs sur la base du taux de faux positifs par rapport à un seuil de taux de faux positifs.

11. Support non transitoire, lisible par une machine, sur lequel sont stockées des instructions qui sont exécutables par un dispositif informatique afin d'effectuer des opérations consistant à :

introduire (501) un ensemble de caractéristiques d'un premier échantillon de logiciel dans un premier modèle d'apprentissage automatique ;
déterminer qu'une première valeur de classification émise par le premier modèle d'apprentissage automatique pour le premier échantillon de logiciel se situe ou non dans une plage de valeurs de classification,
dans lequel la plage de valeurs de classification a été ajustée sur la base, au moins en partie, des faux positifs des classifications par un second modèle d'apprentissage automatique d'un ensemble d'entraînement d'ensembles de caractéristiques d'échantillons de logiciels ;
sur la base du fait de déterminer (507) que la première valeur de classification se situe dans la plage de valeurs de classification, indiquer la classification du premier échantillon de logiciel comme étant inoffensif ou malveillant selon la classification du premier échantillon de logiciel par le second modèle d'apprentissage automatique ; et

sur la base du fait de déterminer (509) que la première valeur de classification est en dehors de la plage de valeurs de classification, indiquer la classification du premier échantillon de logiciel comme inoffensif ou malveillant selon la classification du premier échantillon de logiciel par le premier modèle d'apprentissage automatique.

12. Support lisible par une machine selon la revendication 11, comprenant en outre des instructions exécutables par le dispositif informatique pour, sur la base du fait de déterminer que la première valeur de classification se situe dans la plage de valeurs de classification, introduire l'ensemble de caractéristiques dans le second modèle d'apprentissage automatique ; et choisir éventuellement, pour la classification du premier échantillon de logiciel comme malveillant ou inoffensif, entre le résultat du premier modèle d'apprentissage automatique et celui du second modèle d'apprentissage automatique, sur la base du fait de déterminer que la première valeur de classification émise par le premier modèle d'apprentissage automatique se situe ou non dans la plage de valeurs de classification.

13. Appareil (201) comprenant :

un processeur ; et
un support lisible par une machine sur lequel sont stockées des instructions exécutables par le processeur pour amener l'appareil à
déterminer un premier sous-ensemble d'une pluralité de valeurs de classification générées par un premier modèle d'apprentissage automatique qui se situent dans une plage de valeurs de classification, dans lequel la pluralité de valeurs de classification correspondent à des classifications d'échantillons comme malveillants et inoffensifs ;
introduire des ensembles de caractéristiques d'échantillons de logiciels correspondant au premier sous-ensemble de la pluralité de valeurs de classification dans un second modèle d'apprentissage automatique ;
mettre à jour la plage de valeurs de classification sur la base, au moins en partie, des faux positifs des classifications par le second modèle d'apprentissage automatique du premier sous-ensemble de la pluralité de valeurs de classification ; et
indiquer aux premier et second modèles d'apprentissage automatique ensemble en vue de la détection de logiciels malveillants la plage de valeurs de classification mise à jour, dans lequel la détection de logiciels malveillants est basée sur le résultat du second modèle d'apprentissage automatique si le résultat du premier modèle d'apprentissage automatique se situe dans la plage de valeurs de classification mise à jour et la détection de logiciels malveillants est basée sur le résultat du premier modèle d'apprentissage automatique si le résultat du premier modèle d'apprentissage automatique se situe en dehors de la plage de valeurs de classification mise à jour.

14. Appareil selon la revendication 13, dans lequel les instructions de mise à jour de la plage de valeurs de classification comprennent des instructions exécutables par le processeur pour amener l'appareil à mettre à jour de manière itérative une première limite afin d'élargir la plage de valeurs de classification jusqu'à ce qu'un taux de faux positifs ne satisfasse pas un critère de performance du taux de faux positifs, le taux de faux positifs étant calculé sur la base, au moins en partie, des faux positifs du second modèle de détection de logiciels malveillants ; et, éventuellement, sur la base du fait de déterminer que le taux de faux positifs calculé pour une itération en cours ne satisfait pas le critère de performance du taux de faux positifs, à ramener la première limite à la première limite telle qu'elle a été mise à jour lors d'une itération précédente.

15. Appareil selon la revendication 13, dans lequel le support lisible par une machine comprend en outre des instructions exécutables par le processeur pour amener l'appareil à initialiser une limite supérieure de la plage de valeurs de classification à une valeur supérieure à un seuil de détection de logiciels malveillants du premier modèle d'apprentissage automatique.

FIG. 1

FIG. 2

EP 4 189 871 B1

FIG. 3

EP 4 189 871 B1

TUNE AND DEPLOY FIRST AND SECOND MALWARE
DETECTION MODEL USING RANGE OF VALUES

401 — Input Plurality Of Software Sample Feature Sets For
Incoming Software Samples Into A First Malware Detection
Model

403 — Determine A First Subset Of The Plurality Of Software Sample
Feature Sets With Classification Values Generated By The First
Malware Detection Model Within A Range Of Values

405 — Input The First Subset Of Software Sample Feature Sets Into A
Second Malware Detection Model

407 — Tune The Range Of Values Based On False Positives In
Classifications Of The Second Malware Detection Model On
The First Subset Of Software Sample Feature Sets

409 — Indicate The First And Second Malware Detection Models
Together For Malware Detection With The Tuned Range Of
Values

END

FIG. 4

CLASSIFY INCOMING SOFTWARE SAMPLES

501 — Input Feature Set For A First Software Sample Into A First Machine Learning Model

503 — Determine Whether A First Classification Value Output By The First Machine Learning Model Is Within A Range Of Classification Values

505 — Classification Value Within Range Of Classification Values?

YES

NO

507 — Indicate Classification Of The Software Sample As Benign Or Malware According To Classification By A Second Machine Learning Model

509 — Indicate Classification Of The Software Sample And Benign Or Malware According To Classification By The First Machine Learning Model

END

FIG. 5

FIG. 6

FIG. 7

DETERMINE MALWARE VERDICT USING CONJOINED MODELS BASED ON ACTIVATION RANGE FOR SUPPLEMENTAL MALWARE DETECTION MODEL

801 — Extract Feature Set Of Sample For Malware Analysis

803 — Input Sample Feature Set Into Incumbent ML Model

Incumbent ML Model Output

805 — Is Incumbent ML Model Output Within Activation Range? —YES—

809 — Input Sample Feature Set Into Supplemental ML Model

Supplemental ML Model Output

NO

807 — Does Incumbent ML Model Indicate Sample Is Malware? —NO—◯—NO—

811 — Does Supplemental ML Model Indicate Sample Is Malware?

813 — Indicate Sample As Benign

END

YES

YES

815 — Indicate Sample As Malware

FIG. 8

DETERMINE MALWARE VERDICT USING CONJOINED MODELS BASED ON ACTIVATION RANGE FOR SUPPLEMENTAL MALWARE DETECTION MODEL

901 — Extract Feature Set Of Sample For Malware Analysis

903 — Input Sample Feature Set Into Incumbent ML Model

905 — Input Sample Feature Set Into Supplemental Model

Incumbent ML Model Output —————— Supplemental ML Model Output

907

Is Incumbent ML Model Classification In Activation Range?

NO

YES

909 — Communicate Incumbent ML Model Classification

911 — Communicate Supplemental ML Model Classification

END

FIG. 9

1005

1001

Processor
Unit

Network
Interface

Bus

1007

Memory

Detection Model Activation
Range Tuner

1011

Incumbent/Supplemental
Model Sample Filter

1013

1003

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2019294792 A1

**Non-patent literature cited in the description**

• *A Distance-Based Method for Building an Encrypted Malware Traffic Identification Framework*
• *DeepRefiner: Multi-layer Android Malware Detection System Applying Deep Neural Networks*

• *A Multi-Stage Network Anomaly Detection Method for Improving Efficiency and Accuracy*